# EUROPEAN PATENT APPLICATION

(11) **EP 4 692 874 A1**
(43) Date of publication of application: **11.02.2026**
(21) Application number: 23935142.2
(22) Date of filing: 18.12.2023
(51) Int. Cl.: G02B 6/122

(54) **OPTICAL CHIP, OPTICAL MODULE AND OPTICAL COMMUNICATION DEVICE**

(30) Priority: 26.04.2023 CN 202310480128
(71) Applicant: Huawei Technologies Co., Ltd., Shenzhen, Guangdong 518129 (CN)
(72) Inventor: YANG, Yang, Shenzhen, Guangdong 518129 (CN); ZHENG, Wen, Shenzhen, Guangdong 518129 (CN); SUN, Mengdie, Shenzhen, Guangdong 518129 (CN); WEN, Juanjuan, Shenzhen, Guangdong 518129 (CN); HAN, Xianglei, Shenzhen, Guangdong 518129 (CN)
(74) Representative: Goddar, Heinz J.
(86) International application number: PCT/CN2023/139339
(87) International publication number: WO 2024/221976

(57) **Abstract**

An optical chip (10, 10a, 10b, 10c, 10d, 10e, 10f, 10g), an optical module (100), and an optical communication device (1000) are provided. The optical chip (10, 10a, 10b, 10c, 10d, 10e, 10f, 10g) includes a substrate (1), a first oxide layer (2), a front functional structure layer, and a second oxide layer (4) that are sequentially stacked. The front functional structure layer of the optical chip (10, 10a, 10b, 10c, 10d, 10e, 10f, 10g) covers a first region (21) on a first surface of the first oxide layer (2). The second oxide layer (4) covers the front functional structure layer and a region other than the first region (21) on the first surface of the first oxide layer (2). A rear substrate hollowed structure (11, 11a, 11b, 11c) is disposed on the substrate (1) of the optical chip (10, 10a, 10b, 10c, 10d, 10e, 10f, 10g). An inner surface of the substrate hollowed structure (11, 11a, 11b, 11c) extends to a second region (12) on a first surface of the substrate (1). The second region (12) includes a region that is opposite to the front functional structure layer, and a process window (13, 13a, 13b, 13c) of the substrate hollowed structure (11, 11a, 11b, 11c) is formed on a second surface of the substrate (1). A process window structure for hollowing the substrate (1) is disposed on a rear side of the optical chip (10, 10a, 10b, 10c, 10d, 10e, 10f, 10g), and the second oxide layer (4) and the first oxide layer (2) collectively form planar support, effectively improving mechanical strength and stability of the structure. In addition, another front functional structure may be arranged according to a requirement, and there is good process compatibility.

## Description

This application claims priority to Chinese Patent Application No. 2023104801281, filed with the China National Intellectual Property Administration on April 26, 2023 and entitled "OPTICAL CHIP, OPTICAL MODULE, AND OPTICAL COMMUNICATION DEVICE", which is incorporated herein by reference in its entirety.

### TECHNICAL FIELD

Embodiments of this application relate to the optical communication field, and in particular, to an optical chip and an optical communication device.

### BACKGROUND

With development of emerging services such as 5G, cloud computing, and big data, an amount of Internet services and data computing increases exponentially. Data centers are gradually evolving from individual units to large-scale deployment, and data center interconnection networks have emerged. An optical chip technology used for data transmission has evolved rapidly, to achieve higher speed, lower energy consumption, and higher bandwidth. A substrate hollowed structure of an optical chip may satisfy corresponding performance requirements of various functional components, for example, but not limited to, use for manufacturing micro-nano optical components such as an edge coupler, a thermal-tuning phase shifter, and an electro-optic modulator, to improve component performance.

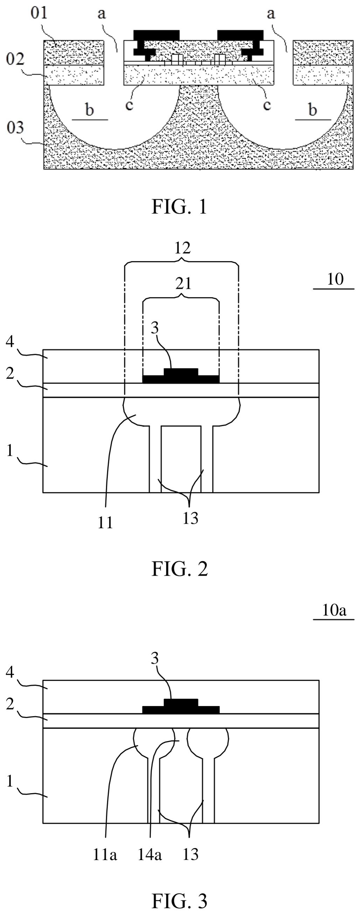

Refer to FIG. 1. FIG. 1 is a diagram of a typical front substrate hollowed structure of an optical chip. In a process step of a front substrate hollowing technology, first, a part of SiO2 materials on two sides of a region that needs to be hollowed are etched, to expose a silicon substrate; and then, the silicon substrate at the bottom of the region that needs to be hollowed is etched by using an isotropic etching technology.

Limited by a structure of the optical chip, this solution has the following disadvantages in actual application: First, after the substrate is hollowed, a front structure of the optical chip is supported by a thin and long suspension beam that is formed by a silicon oxide material. The silicon oxide suspension beam is usually fragile, and mechanical strength and stability of the structure are relatively poor. Second, in this solution, an etched window is needed to complete substrate hollowing, and the etched window may be formed only by using the silicon oxide material. Any other effective structure cannot be filled. In particular, flexibility of metal routing and waveguide design is limited. Third, another process cannot be superimposed based on the formation of the etched window. For example, but without limitation, an advanced chip packaging process (Advanced Packaging) involves adhesive filling (underfill) between chips, and adhesive entering the etched window directly affects performance and reliability of the substrate hollowed structure.

### SUMMARY

Embodiments of this application provide an optical chip, an optical module, and an optical communication device, to improve mechanical strength and stability of a structure through structure optimization of the optical chip, and improve process compatibility.

According to a first aspect of embodiments of this application, an optical chip is provided. The optical chip includes a substrate, a first oxide layer, a front functional structure layer, and a second oxide layer that are sequentially stacked. The front functional structure includes at least an optical waveguide. The first oxide layer covers a first surface of the substrate. The front functional structure layer covers a first region on a first surface of the first oxide layer. The second oxide layer covers the front functional structure layer and a region other than the first region on the first surface of the first oxide layer. A rear substrate hollowed structure is disposed on the substrate of the optical chip. An inner surface of the substrate hollowed structure extends to a second region on the first surface of the substrate. The second region includes a region that is opposite to the front functional structure layer, and a process window of the substrate hollowed structure is formed on a second surface of the substrate. The second surface of the substrate is opposite to the first surface of the substrate. In this manner of arrangement, a process window structure for hollowing the substrate is disposed on a rear side of the optical chip, and the second oxide layer and the first oxide layer collectively form planar support, to effectively improve mechanical strength and stability of the structure in comparison with a cantilever beam support structure.

In addition, based on the optical chip structure, there is no need to perform hollowing window etching on a front side, and another front functional structure may be arranged according to an overall design requirement of a product, to satisfy component function requirements in different application scenarios. In particular, in a high-density packaging application scenario, layout difficulty and routing pressure may be effectively reduced.

Furthermore, based on structural characteristics that there is no hollowing window on the front side of the optical chip, that is, there is a complete surface on the front side of the chip, superimposition with another semiconductor process may be performed, and is not affected by adhesive filling in an advanced packaging process. Therefore, process compatibility is relatively good.

Based on the first aspect, an embodiment of this application further provides a first implementation of the first aspect: The process window of the substrate hollowed structure is a columnar process window, and a plurality of process windows are disposed. Specifically, an etching and forming process of the substrate hollowed structure includes two stages. A first stage is etching the process window, and a second stage is etching the substrate hollowed structure. Within a pattern of the substrate hollowed structure, components such as the first oxide layer, a passive waveguide layer, and the second oxide layer above the substrate hollowed structure are a fully suspended structure, and the second oxide layer and the first oxide layer collectively form planar support. The structure is simple and reliable, and the process is relatively good.

Based on the first implementation of the first aspect, an embodiment of this application further provides a second implementation of the first aspect: There is a support pillar in the substrate hollowed structure, and the support pillar is located on substrate silicon between adjacent process windows, and extends to the first surface of the substrate, to offset a second surface of the first oxide layer to form support. In actual application, the support pillar may be formed at the second stage of etching the substrate hollowed structure. In other words, a part of the substrate silicon is kept at the second stage of etching, to form a silicon support pillar for enhancing a support function, thereby further improving overall mechanical strength and stability of the structure.

In some actual application, the etching process windows of the rear substrate hollowed structure may be separately sealed by using sealing members, to satisfy a packaging adhesive overflow requirement.

In another actual application, based on the rear substrate hollowed structure, a front functional structure such as a metal interconnection wire or a metal electrode may be disposed on the front side according to a function requirement of the optical chip. For example, the optical chip may form a TSV filling layer through puncturing and metal filling. One end of the filling layer may be coupled to RDL or PAD81 that is disposed on a first surface of the second oxide layer. An electrode bonding point may be formed at the other end of the filling layer based on a bump semiconductor packaging process, to construct an electrical connection perpendicular to a surface of the optical chip as a whole, thereby implementing interconnection between different chips.

Based on the first implementation of the first aspect or the second implementation of the first aspect, an embodiment of this application further provides a third implementation of the first aspect: The plurality of process windows are arranged in an array on the second surface of the substrate or on a top-view projection surface of the substrate. For example, the plurality of process windows are arranged on the second surface of the substrate in a two-dimensional periodic array. Alternatively, the plurality of process windows may also be arranged on the second surface of the substrate in a horizontally and vertically staggered manner, for example, but not limited to, arranged in a honeycomb-shaped staggered manner.

Based on the first implementation of the first aspect, the second implementation of the first aspect, or the third implementation of the first aspect, an embodiment of this application further provides a fourth implementation of the first aspect: A cross section of the columnar process window is circular or polygonal. For example, a shape of the cross section of the columnar process window may be a quadrilateral, a hexagon, an octagon, or the like, or the columnar process window may be another irregular cross section.

Based on the first aspect, or the first implementation of the first aspect, or the second implementation of the first aspect, or the third implementation of the first aspect, or the fourth implementation of the first aspect, an embodiment of this application further provides a fifth implementation of the first aspect: A cross-sectional shape of the substrate hollowed structure is a trapezoid, a rectangle, an arc, or a rectangle with an arc connection between adjacent edges, which may be determined according to an overall design requirement of an actual product in actual application.

Based on the first aspect, an embodiment of this application further provides a sixth implementation of the first aspect: The process window and the substrate hollowed structure are an integrated hollowed structure, and the substrate hollowed structure may be formed by using a one-stage etching process. The process is relatively simple.

In actual application, a side surface of the integrated hollowed structure may be a vertical side wall.

In another practical application, the side surface of the integrated hollowed structure is a tilted side wall. For example, the cross section of the integrated hollowed structure tends to gradually become narrow from the second surface of the substrate to the first surface of the substrate, or the cross section of the integrated hollowed structure may tend to gradually become wide from the second surface of the substrate to the first surface of the substrate.

Based on the first aspect, or the first implementation of the first aspect, or the second implementation of the first aspect, or the third implementation of the first aspect, or the fourth implementation of the first aspect, or the fifth implementation of the first aspect, or the sixth implementation of the first aspect, an embodiment of this application further provides a seventh implementation of the first aspect: The optical waveguide is a passive waveguide layer for constructing an edge coupler or a polarization rotator-splitter.

In actual application, the optical waveguide may alternatively be a modulator waveguide layer for constructing an electro-optic modulator. The front functional structure further includes a modulator electrode. One end of the modulator electrode is coupled to the modulator waveguide layer, and the other end of the modulator electrode is disposed on a first surface of the second oxide layer.

In another actual application, the optical waveguide may alternatively be a thermal-tuning phase shifter waveguide layer for constructing a thermal-tuning phase shifter, and the front functional structure further includes a thermal-tuning phase shifter electrode and a heater. The heater is located on a side that is in the second oxide layer and that is close to the first surface. The heater and the thermal-tuning phase shifter waveguide layer are spaced from each other. One end of the thermal-tuning phase shifter electrode is coupled to the heater, and the other end of the thermal-tuning phase shifter electrode is disposed on a first surface of the second oxide layer.

According to a second aspect of embodiments of this application, an optical module is provided. The optical module includes a housing, a printed circuit board, and an optical chip. The printed circuit board and the optical chip are disposed in the housing. The optical chip is electrically connected to the printed circuit board, and the optical chip uses the optical chip described above. Based on the foregoing technical advantages of the optical chip, function requirements of optical modules to be used in different scenarios may be satisfied.

According to a third aspect of embodiments of this application, an optical communication device is provided, includes a device chassis and a mainboard that is disposed in the device chassis, and further includes an optical module connected to the mainboard. The optical module includes the optical chip described above, or the optical module uses the optical module described above.

In actual application, the optical communication device may be a product type such as a server computer, a router, or a switch, and is particularly applicable to a data center server with high power, high integration, and a super large scale.

### BRIEF DESCRIPTION OF DRAWINGS

FIG. 1 is a diagram of a typical front substrate hollowed structure of an optical chip;
FIG. 2 is a diagram of a structure of an optical chip according to an embodiment of this application;
FIG. 3 is a diagram of a structure of another optical chip according to an embodiment of this application;
FIG. 4 is a diagram of a top-view arrangement relationship between a substrate hollowed structure and a process window according to an embodiment of this application;
FIG. 5 is a diagram of a top-view arrangement relationship between another substrate hollowed structure and a process window according to an embodiment of this application;
FIG. 6 is a diagram of a structure of still another optical chip according to an embodiment of this application;
FIG. 7 is a diagram of a structure of yet another optical chip according to an embodiment of this application;
FIG. 8 is a diagram of a top-view arrangement relationship between still another substrate hollowed structure and a process window according to an embodiment of this application;
FIG. 9 is a diagram of a structure of still yet another optical chip according to an embodiment of this application;
FIG. 10 is a diagram of a structure of a further optical chip according to an embodiment of this application;
FIG. 11 is a diagram of a use status of an optical chip according to an embodiment of this application;
FIG. 12 is a diagram of another usage state of an optical chip according to an embodiment of this application;
FIG. 13 is a diagram of a structure of an optical module according to an embodiment of this application; and
FIG. 14 is a diagram of a structure of an optical communication device according to an embodiment of this application.

### DESCRIPTION OF EMBODIMENTS

Embodiments of this application provide an optical chip having a rear substrate hollowed structure, to improve mechanical strength and stability of the structure through structure optimization and improve process compatibility of the optical chip.

An optical chip is an electronic component used to perform optical-to-electrical signal conversion, processing, control, and modulation. It is widely applied to fields such as a core switching network device, a wavelength division multiplexing device, and a 5G device of a communication operator. The optical chip further includes various functional components, for example, micro-nano optical components such as an edge coupler, a thermal-tuning phase shifter, and an electro-optic modulator. These optical components play an important role in processing, controlling, and modulating an optical signal.

Definitions of a front side and a rear side of the optical chip usually depend on a specific functional structure and an application scenario of the component. Herein, a substrate side of the optical chip is defined as the rear side, and correspondingly, an optical path structure side of the component is defined as the front side of the optical chip.

A substrate hollowed structure of the optical chip is a micro-nano structure formed by hollowing a substrate material below a functional region by using a process method, to improve component performance and reliability. The "functional region" means a region in which a front functional structure corresponding to the substrate hollowed structure is located, for example, but not limited to, a region in which a waveguide is located. A size of the functional region may be greater than a size of the front functional structure, or less than the size of the front functional structure, or approximately the same as the size of the front functional structure.

Refer to FIG. 1. FIG. 1 is a diagram of a typical front substrate hollowed structure of an optical chip.

In a process step of the front substrate hollowed structure, first, an etching process window a is formed at a second oxide layer 01 on two sides of a functional region. Specifically, a part of SiO2 materials of the second oxide layer 01 and a first oxide layer 02 are etched and removed to expose a silicon substrate 03; and then, the silicon substrate below the functional region is etched to form a hollowed structure b by using an isotropic etching technology. The substrate hollowed structure of the optical chip implemented by using the front substrate hollowing technology has the following disadvantages in actual application: First, the front functional region of the optical chip is supported by a thin and long suspension beam c that is formed by a silicon oxide material, and mechanical strength and stability of the structure are relatively poor. Second, in this solution, the etched window is needed to complete substrate hollowing. Due to limitations of an etching process, the etching process window may be formed only based on the silicon oxide material, and another front functional structure cannot be filled and arranged. This limits, for example, but not limited to, flexibility of metal routing and waveguide design. Third, another process cannot be superimposed based on the formation of the etching process window. For example, but without limitation, an advanced chip packaging process involves adhesive filling (underfill) between chips, and if adhesive enters the etched window, performance and reliability of the substrate hollowed structure are directly affected.

On this basis, an embodiment of this application provides an optical chip. The optical chip includes a substrate, a first oxide layer, a front functional structure layer, and a second oxide layer that are sequentially stacked. The first oxide layer covers a first surface of the substrate, the front functional structure layer covers a first region on a first surface of the first oxide layer, and the second oxide layer covers the front functional structure layer and a region other than the first region on the first surface of the first oxide layer. A substrate hollowed structure is disposed on the substrate. An inner surface of the substrate hollowed structure extends to a second region on the first surface of the substrate. The second region includes a region that is opposite to the front functional structure layer. Herein, the front functional structure includes a waveguide, and may further include a metal interconnection wire or a metal electrode structure in specific implementation. A process window of the substrate hollowed structure is formed on a second surface of the substrate. The second surface of the substrate is opposite to the first surface of the substrate. In this manner of arrangement, a process window structure for hollowing the substrate is disposed on a rear side of the optical chip, and the second oxide layer and the first oxide layer collectively form planar support, to effectively improve mechanical strength and stability of the structure in comparison with a cantilever beam support structure.

In addition, based on the optical chip structure, there is no need to perform hollowing window etching on a front side, and another front functional structure may be arranged according to an overall design requirement of a product, to satisfy component function requirements in different application scenarios. Furthermore, based on structural characteristics that there is no hollowing window on the front side of the optical chip, that is, there is a complete surface on the front side of the chip, superimposition with another semiconductor process may be performed, and is not affected by adhesive filling in an advanced packaging process. Therefore, process compatibility is relatively good.

To better understand the technical solutions and technical effects of this application, without loss of generality, the following describes in detail specific embodiments of the optical chip with reference to the accompanying drawings.

Refer to FIG. 2. FIG. 2 is a diagram of a structure of an optical chip according to an embodiment of this application. FIG. 2 shows a structure of an edge coupler of an optical chip 10. The edge coupler is configured to implement propagation of light between an optical fiber and the optical chip in an optical communication system, that is, configured to couple an optical signal in the optical fiber to a transmission waveguide in an optoelectronic chip. For ease of description, in this specification, upper surfaces of all layers of the optical chip shown in the figure are uniformly described as first surfaces, and lower surfaces of all these layers are uniformly described as second surfaces.

As shown in FIG. 2, the optical chip 10 includes a substrate 1, a first oxide layer 2, a passive waveguide layer 3, and a second oxide layer 4 that are sequentially stacked. The first oxide layer 2 covers a first surface of the substrate 1. The passive waveguide layer 3 covers a first region 21 on a first surface of the first oxide layer 2. The second oxide layer 4 covers the passive waveguide layer 3 and a region other than the first region 21 on the first surface of the first oxide layer 2. In this implementation solution, a front functional structure corresponding to the substrate hollowed structure 11 that is located on the substrate 1 is the passive waveguide layer 3 of the edge coupler.

An inner surface of the substrate hollowed structure 11 extends to a second region 12 on the first surface of the substrate 1, and the second region 12 includes a region that is opposite to the passive waveguide layer 3, to reduce a light field leaked to the silicon substrate, and reduce an insertion loss of the edge coupler by reducing absorption of an optical signal by the substrate. In the figure, a size proportion relationship between the substrate hollowed structure 11 and the passive waveguide layer 3 is illustrated by using an example in which a size of the second region 12 is greater than a size of the first region 21. In another specific implementation, sizes of the second region 12 and the first region 21 may be determined according to a requirement. This is not limited in this embodiment.

In addition, a cross-sectional shape of the substrate hollowed structure 11 may be a trapezoid, a rectangle, an arc, or a rectangle with an arc connection between adjacent edges. This is not limited in this embodiment.

In this implementation solution, the substrate hollowed structure 11 is disposed with a columnar process window 13. Based on structural characteristics that the process window 13 of the substrate hollowed structure 11 is located on a second surface of the substrate 1, the etching process window 13 for forming the substrate hollowed structure 11 is disposed on a rear side of the optical chip; the first oxide layer 2 covers the passive waveguide layer 3 and a second surface of the second oxide layer 4; and the second oxide layer 4 and the first oxide layer 2 collectively form plane support to provide a bearing capacity, thereby effectively improving mechanical strength and stability of the structure. In addition, arrangement of another front functional structure of the optical chip is not affected, and there is relatively good compatibility with superimposition of another semiconductor process.

In addition, in comparison with an edge coupler having no rear substrate hollowed structure, basic composition of the edge coupler described in this implementation solution is kept basically the same. A material of the substrate 1 is Si, a material of the first oxide layer 2 is SiO2, a material of the passive waveguide layer 3 is SiN, and a material of the second oxide layer 4 is SiO2. A coupling loss test result shown in Table 1 is obtained through simulation. Specifically, test conditions are input light waves of a transverse electric (transverse electric, TE) wave fundamental mode and a transverse magnetic (transverse magnetic, TM) wave fundamental mode separately, and a test wavelength is 1310 nm.

**Table 1**

| | TE mode loss @ 1310 nm | TM mode loss @ 1310 nm |
|---|---|---|
| This implementation solution having the rear substrate hollowed structure | 0.5 dB | 1.2 dB |
| Comparative solution having no rear substrate hollowed structure | 0.8 dB | 4.5 dB |

It can be learned from the simulation test result shown in Table 1 that, in comparison with the-end face coupler having no rear substrate hollowed structure in the comparative example, for the edge coupler described in this implementation solution, the coupling loss in the TE test mode is reduced by 0.3 dB, and the coupling loss in the TM test mode is reduced by 3.3 dB. Under the same conditions, this implementation solution may effectively reduce the coupling loss, and significantly improve coupling efficiency.

It should be understood that, based on the optical chip structure described in FIG. 2, a polarization rotator-splitter may be further constructed, to split linearly polarized light into two channels and rotate a polarization direction of one of the channels, thereby effectively improving beam splitting efficiency.

The substrate hollowed structure 11 described in the foregoing embodiment is formed by using the columnar process window 13 that extends to the second surface of the substrate 1. The etching and forming process of the substrate hollowed structure 11 includes two stages. A first stage is etching the process window 13, and a second stage is etching the substrate hollowed structure 11. Within a pattern of the substrate hollowed structure 11, components such as the first oxide layer 2, the passive waveguide layer 3, and the second oxide layer 4 above the substrate hollowed structure 11 are a fully suspended structure, and mainly the second oxide layer 4 and the first oxide layer 2 collectively form planar support.

To further improve a bearing capacity of the structure, a support pillar may be formed in the substrate hollowed structure. Refer to FIG. 3. FIG. 3 is a diagram of a structure of another optical chip according to an embodiment of this application. To clearly show a difference and a relationship between this implementation solution and the embodiment described in FIG. 2, same functional compositions or structures are illustrated by using same marks in the figure.

As shown in FIG. 3, in the optical chip 10a provided in this implementation solution, a substrate hollowed structure 11a of the optical chip 10a has a support pillar 14a. The support pillar 14a is located on substrate silicon between columnar process windows 13, and extends to a first surface of a substrate 1, to offset a second surface of a first oxide layer 2 to form support. In specific implementation, the support pillar 14a may be formed at the second stage of etching the substrate hollowed structure 11a. In other words, a part of the substrate silicon is retained at the second stage of etching, to form a silicon support pillar to enhance a support function. In this way, overall mechanical strength and stability of the structure may be further improved.

In addition, for the columnar process window 13, different cross-sectional shapes may be selected according to a requirement in specific implementation.

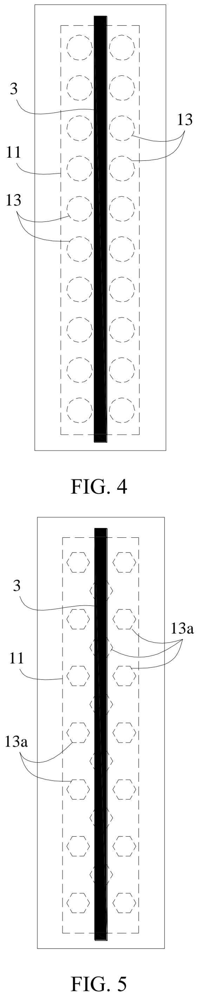

Refer to FIG. 4. FIG. 4 is a diagram of a top-view arrangement relationship between a substrate hollowed structure and a process window according to an embodiment of this application. As shown in the figure, a cross-sectional shape of each process window 13 is a circle. On a second surface of a substrate or on a top-view projection surface of the substrate, the process windows 13 are arranged in ten rows and two columns in an array, and are all located in an outline of a substrate hollowed structure 11. It should be understood that, in another specific implementation, the cross-sectional shape of the columnar process window 13 may be a polygon such as a quadrilateral, a hexagon, or an octagonal, or may be another irregular cross section. Each process window may alternatively use another two-dimensional periodic array arrangement manner, or may be arranged in a horizontally and vertically staggered manner. Specifically, any combination may be made for the cross-sectional shape and the cross-sectional arrangement manner according to a requirement. This is not limited in this embodiment.

For example, refer to FIG. 5. FIG. 5 is a diagram of a top-view arrangement relationship between another substrate hollowed structure and a process window according to an embodiment of this application. A cross-sectional shape of each process window 13a is a hexagon, and the process windows 13a are arranged in a honeycomb-shaped staggered manner.

The substrate hollowed structures described in the foregoing implementation solutions all use a two-stage etching and forming process. In specific implementation, the substrate hollowed structure may alternatively be disposed as a structure that may be formed through one-stage etching.

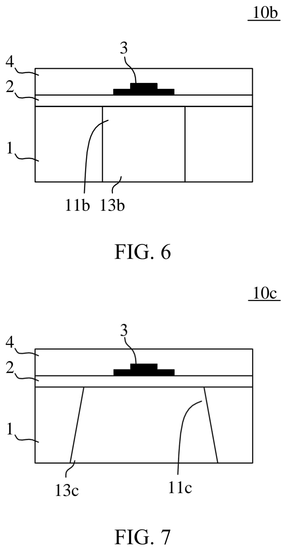

Refer to FIG. 6 and FIG. 7, which are diagrams of structures of another two types of optical chips according to embodiments of this application. To clearly show differences and relationships between the implementation solutions and the foregoing embodiments, same functional compositions or structures are illustrated by using same marks in the figures.

As shown in FIG. 6, in an optical chip 10b provided in this implementation solution, a substrate hollowed structure 11b of the optical chip 10b and an etching process window 13b are an integrated hollowed structure, and a side surface of the integrated hollowed structure is a vertical side wall. It can be understood that "vertical" herein and "tilted" used in the following description are relative structural position relationships described by using extended planes of various layers of the optical chip as a reference.

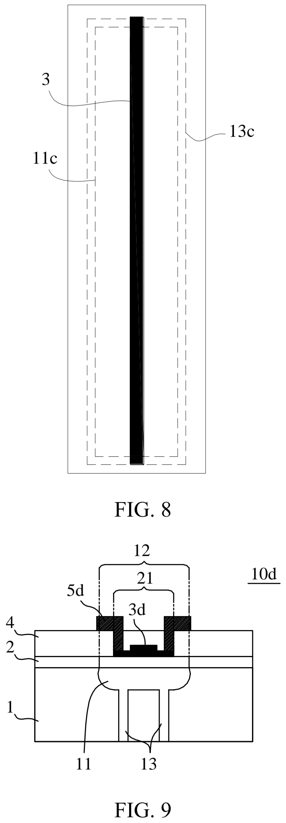

As shown in FIG. 7, in an optical chip 10c provided in this implementation solution, a substrate hollowed structure 11c of the optical chip 10c and an etching process window 13c are an integrated hollowed structure, and a side surface of the integrated hollowed structure is a tilted side wall. As shown in the figure, a cross section of the integrated hollowed structure tends to gradually become narrow from a second surface of a substrate 1 to a first surface of the substrate 1. Refer to FIG. 8. FIG. 8 is a diagram of a top-view arrangement relationship between still another substrate hollowed structure shown in FIG. 7 and a process window.

Certainly, for the integrated hollowed structure whose side surface is a tilted side wall, in another specific implementation, the cross section of the integrated hollowed structure may alternatively tend to gradually become wide from the second surface of the substrate 1 to the first surface of the substrate 1.

It should be noted that, the rear substrate hollowed structures based on the optical chips in the foregoing embodiments may also be applied to another component type. The following separately makes description by using the rear substrate hollowed structure that is formed through the two stages of etching as an example.

Refer to FIG. 9. FIG. 9 is a diagram of a structure of still yet another optical chip according to an embodiment of this application. FIG. 9 shows an electro-optic modulator structure of the optical chip. The electro-optic modulator is configured to modulate the strength of an optical signal by using an electric field. To clearly show differences and relationships between this implementation solution and the foregoing embodiments, same functional compositions or structures are illustrated by using same marks in the figure.

As shown in FIG. 9, the optical chip 10d includes a substrate 1, a first oxide layer 2, a modulator waveguide layer 3d, and a second oxide layer 4 that are sequentially stacked. One end of a modulator electrode 5d is coupled to the modulator waveguide layer 3d, and the other end of the modulator electrode 5d is disposed on a first surface of the second oxide layer 4. The first oxide layer 2 covers a first surface of the substrate 1. The modulator waveguide layer 3d covers a first region 21 on a first surface of the first oxide layer 2. The second oxide layer 4 covers the modulator waveguide layer 3d and a region other than the first region 21 on the first surface of the first oxide layer 2. In this implementation solution, front functional structures corresponding to a substrate hollowed structure 11 that is located on the substrate 1 are the modulator waveguide layer 3d of the electro-optic modulator and the modulator electrode 5d.

The substrate hollowed structure 11 in this implementation solution also extends to a second region 12 on the first surface of the substrate 1. The second region 12 includes a region that is opposite to the modulator waveguide layer 3d and the modulator electrode 5d, to improve modulation efficiency and improve optical transmission performance. In actual application, based on structural characteristics that a process window 13 of the substrate hollowed structure 11 is located on a second surface of the substrate 1, mechanical strength and stability of the structure may be effectively improved, and process compatibility is relatively good.

In addition, in comparison with an electro-optic modulator having no rear substrate hollowed structure, basic composition of the electro-optic modulator described in this implementation solution is kept basically the same. A material of the substrate 1 is Si, a material of the first oxide layer 2 is SiO2, a material of the modulator waveguide layer 3d is lithium niobate, and a material of the second oxide layer 4 is SiO2. A bandwidth test result shown in Table 2 is obtained through simulation.

**Table 2**

| | Bandwidth @ Lithium niobate electro-optic modulator |
|---|---|
| This implementation solution having the rear substrate hollowed structure | 67 GHz |
| Comparative solution having no rear substrate hollowed structure | 33 GHz |

It can be learned from the simulation test result shown in Table 2 that, in comparison with the electro-optic modulator having no rear substrate hollowed structure in the comparative example, the electro-optic modulator described in this implementation solution has significantly higher bandwidth than the electro-optic modulator having no rear substrate hollowed structure under the same condition.

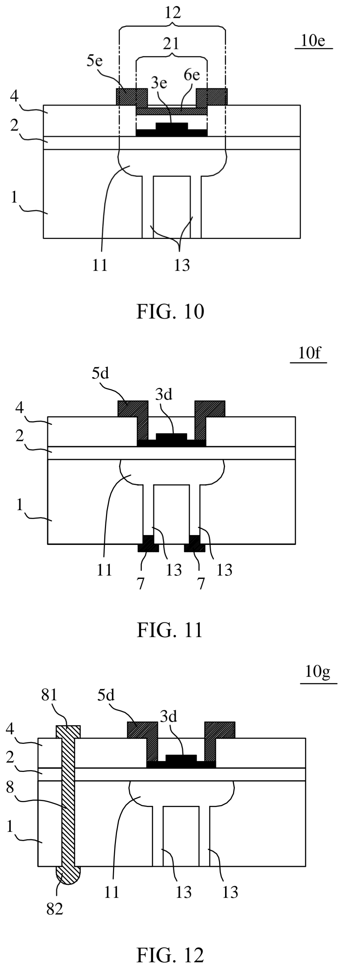

Refer to FIG. 10. FIG. 10 is a diagram of a structure of a further optical chip according to an embodiment of this application. FIG. 10 shows a structure of a thermal-tuning phase shifter of the optical chip. The thermal-tuning phase shifter is configured to modulate a phase of an optical signal. Specifically, a temperature of a heater is controlled by using a current or a voltage, to cause a refractive index change in a thermal-tuning phase shifter waveguide layer, thereby implementing modulation of the phase of the optical signal. To clearly show differences and relationships between this implementation solution and the foregoing embodiments, same functional compositions or structures are illustrated by using same marks in the figure.

As shown in FIG. 10, the optical chip 10e includes a substrate 1, a first oxide layer 2, a thermal-tuning phase shifter waveguide layer 3e, and a second oxide layer 4 that are sequentially stacked. One end of a thermal-tuning phase shifter electrode 5e is coupled to a heater 6e, and the other end of the thermal-tuning phase shifter electrode 5e is disposed on a first surface of the second oxide layer 4. The heater 6e is located on a side that is in the second oxide layer 4 and that is close to the first surface. The heater 6e and the thermal-tuning phase shifter waveguide layer 3e are spaced from each other. The first oxide layer 2 covers a first surface of the substrate 1. The thermal-tuning phase shifter waveguide layer 3e covers a first region 21 on a first surface of the first oxide layer 2. The second oxide layer 4 covers the thermal-tuning phase shifter waveguide layer 3e and a region other than the first region 21 on the first surface of the first oxide layer 2. In this implementation solution, front functional structures corresponding to a substrate hollowed structure 11 that is located on the substrate 1 are the thermal-tuning phase shifter waveguide layer 3e of the thermal-tuning phase shifter, the thermal-tuning phase shifter electrode 5e, and the heater 6e.

The substrate hollowed structure 11 in this implementation solution also extends to a second region 12 on the first surface of the substrate 1. The second region 12 includes a region that is opposite to the thermal-tuning phase shifter waveguide layer 3e, the thermal-tuning phase shifter electrode 5e, and the heater 6e, thereby effectively reducing heat loss of the components and reducing power consumption. In actual application, based on structural characteristics that a process window 13 of the substrate hollowed structure 11 is located on a second surface of the substrate 1, mechanical strength and stability of the structure may be effectively improved, and process compatibility is relatively good.

In addition, in comparison with a thermal-tuning phase shifter having no rear substrate hollowed structure, basic composition of the thermal-tuning phase shifter described in this implementation solution is kept basically the same, and a power consumption test result shown in Table 3 is obtained through simulation, where a test wavelength is 1310 nm.

**Table 3**

| | Power consumption caused by a phase shift of π @ 1310 nm |
|---|---|
| This implementation solution having the rear substrate hollowed structure | 1 mW |
| Comparative solution having no rear substrate hollowed structure | 29 mW |

It can be learned from the simulation test result shown in Table 3 that, in comparison with the thermal-tuning phase shifter having no rear substrate hollowed structure in the comparative example, for the thermal-tuning phase shifter described in this implementation solution, when a phase change caused by a temperature change of a heat source reaches π under a same condition, power consumption caused by the phase shift of π in this implementation solution may be reduced by 28 mW, which is significantly superior to power consumption of the thermal-tuning phase shifter having no rear substrate hollowed structure.

In conclusion, the rear substrate hollowed structure of the optical chip provided in this embodiment of this application has the following technical advantages.

First, for different types of optical components, related performance benefits of a front substrate hollowing technology are provided.

Second, in comparison with the front substrate hollowing technology, in this embodiment of this application, the rear substrate hollowed structure is disposed, and a silicon oxide layer on a front side does not need to be etched. The first oxide layer and the second oxide layer collectively provide bearing support, to effectively improve mechanical strength and stability of the structure.

Third, in comparison with the front substrate hollowing technology, in this embodiment of this application, the rear substrate hollowed structure is disposed, and no etching is needed on the front side. A structure design, such as a waveguide and metal routing, is more flexible. In particular, in a high-density packaging application scenario, layout difficulty and routing pressure may be effectively reduced.

Fourth, in comparison with the front substrate hollowing technology, in this embodiment of this application, the rear substrate hollowed structure is disposed, and there is no front hollowed structure. A surface of the optical chip is complete, and may be superimposed with another process such as TSV (Through-Silicon Via, through-silicon via) or bump (spherical packaging), to further enhance compatibility of a rear-end process.

Further, refer to FIG. 11. FIG. 11 is a diagram of a use status of an optical chip according to an embodiment of this application. Specifically, the electro-optic modulator structure described in FIG. 9 is used as an example. As shown in FIG. 11, for a substrate hollowed structure 11 of the optical chip 10f, etching process windows 13 of the optical chip 10f are separately sealed by using sealing members 7, to satisfy a packaging adhesive overflow requirement. On this basis, a micro electronic component may be added to a packaging material on a surface of the optical chip or between chips by using an advanced chip packaging process, to implement a packaging solution with higher performance and more compactness, and provide technical assurance for satisfying a requirement of a modern electronic device for a small size, high performance, and low power consumption.

In specific implementation, selection of a size and a material of the sealing member 7 may be determined according to an actual product performance requirement. Details are not described herein again.

In addition, based on the rear substrate hollowed structure, a front functional structure such as a metal interconnection wire or a metal electrode may be disposed on the front side according to a function requirement of the optical chip. Refer to FIG. 12. FIG. 12 is a diagram of another usage state of an optical chip according to an embodiment of this application. In the figure, the electro-optic modulator structure described in FIG. 9 is also used as an example. The optical chip 10g may form a TSV filling layer 8 through puncturing and metal filling. One end of the filling layer 8 may be coupled to an RDL (a metal line of a redistribution layer) or a PAD (a metal pin) 81 that is disposed on a first surface of a second oxide layer 4. An electrode bonding point 82 may be formed at the other end of the filling layer 8 based on a bump semiconductor packaging process, to construct an electrical connection perpendicular to a surface of the optical chip, thereby implementing interconnection between different chips. Electrical performance and mechanical reliability are relatively good without affecting a process of the substrate hollowed structure.

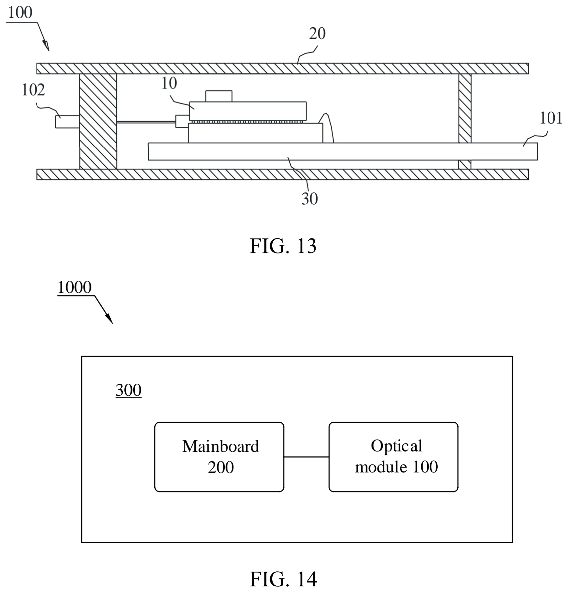

An embodiment of this application further provides an optical module. Refer to FIG. 13. FIG. 13 is a diagram of a structure of an optical module according to an embodiment of this application. The optical module 100 includes a housing 20. A printed circuit board 30 and an optical chip 10 of the optical module 100 are disposed in the housing 20. The optical chip 10 is electrically connected to the printed circuit board 30, and the optical chip is the optical chip described in FIG. 2 to FIG. 12. As shown in the figure, an electrical signal interface 101 configured to cooperate with and connect to a socket on a circuit board in an optical communication device and an optical signal interface 102 configured to connect an optical fiber are separately disposed at two opposite ends of the optical module 100. In another specific implementation, a relative position relationship between the electrical signal interface 101 and the optical signal interface 102 may be another manner, and is not limited in this embodiment.

In different application scenarios, the optical module may convert an electrical signal input by the electrical signal interface into an optical signal for output by the optical signal interface; or convert an optical signal input by the optical signal interface into an electrical signal for output by the electrical signal interface; or convert an electrical signal input by the electrical signal interface into an optical signal for output by the optical signal interface, and at the same time convert an optical signal input by the optical signal interface into an electrical signal for output by the electrical signal interface.

An embodiment of this application further provides an optical communication device. Refer to FIG. 14. FIG. 14 is a diagram of a structure of an optical communication device according to an embodiment of this application. As shown in the figure, the optical communication device 1000 includes a device chassis 300 and a mainboard 200 disposed in the device chassis 300, and further includes an optical module 100. The optical module 100 is connected to the mainboard 200 via an electrical signal interface of the optical module 100, to convert an electrical signal into an optical signal for output, or convert an optical signal into an electrical signal for output, or convert an electrical signal into an optical signal for output and at the same time convert an optical signal into an electrical signal for output. The optical module is an optical module that includes the optical chip described in FIG. 2 to FIG. 12, or the optical module may be the optical module described in FIG. 13.

In specific implementation, the optical module may include an optical component constructed based on the optical chip, such as an edge coupler, a polarization rotator-splitter, an electro-optic modulator, or a thermal-tuning phase shifter. It should be understood that other specific function compositions of the foregoing optical components may be implemented by using a conventional technology. Therefore, details are not described in this specification.

The optical communication device may be a product type such as a server computer, a router, or a switch, and is particularly applicable to a data center server with high power, high integration, and an ultra-large scale. It should be understood that other corresponding functions of the optical communication device are not core invention points of this application. Therefore, details are not described in this specification.

## Claims

1. An optical chip, comprising a substrate, a first oxide layer, a front functional structure layer, and a second oxide layer that are sequentially stacked, wherein the front functional structure comprises an optical waveguide;
the first oxide layer covers a first surface of the substrate, the front functional structure layer covers a first region on a first surface of the first oxide layer, and the second oxide layer covers the front functional structure layer and a region other than the first region on the first surface of the first oxide layer; and
a substrate hollowed structure is disposed on the substrate, an inner surface of the substrate hollowed structure extends to a second region on the first surface of the substrate, the second region comprises a region that is opposite to the front functional structure layer, and a process window of the substrate hollowed structure is formed on a second surface of the substrate.

2. The optical chip according to claim 1, wherein the process window is a columnar process window, and a plurality of process windows are disposed.

3. The optical chip according to claim 2, wherein there is a support pillar in the substrate hollowed structure, and the support pillar is located on substrate silicon between adjacent process windows, and extends to the first surface of the substrate.

4. The optical chip according to claim 2 or 3, wherein the plurality of process windows are arranged in an array on the second surface of the substrate.

5. The optical chip according to claim 4, wherein the plurality of process windows are arranged in a two-dimensional periodic array on the second surface of the substrate, or arranged on the second surface of the substrate in a horizontally and vertically staggered manner.

6. The optical chip according to any one of claims 2 to 5, wherein a cross section of the process window is circular or polygonal.

7. The optical chip according to any one of claims 1 to 6, wherein a cross-sectional shape of the substrate hollowed structure is a trapezoid, a rectangle, an arc, or a rectangle with an arc connection between adjacent edges.

8. The optical chip according to claim 1, wherein the process window and the substrate hollowed structure are an integrated hollowed structure.

9. The optical chip according to claim 8, wherein a side surface of the integrated hollowed structure is a vertical side wall or a tilted side wall.

10. The optical chip according to any one of claims 1 to 9, wherein the optical waveguide is a passive waveguide layer for constructing an edge coupler or a polarization rotator-splitter.

11. The optical chip according to any one of claims 1 to 9, wherein the optical waveguide is a modulator waveguide layer for constructing an electro-optic modulator, the front functional structure further comprises a modulator electrode, one end of the modulator electrode is coupled to the modulator waveguide layer, and the other end of the modulator electrode is disposed on a first surface of the second oxide layer.

12. The optical chip according to any one of claims 1 to 9, wherein the optical waveguide is a thermal-tuning phase shifter waveguide layer for constructing a thermal-tuning phase shifter, the front functional structure further comprises a thermal-tuning phase shifter electrode and a heater, the heater is located on a side that is in the second oxide layer and that is close to the first surface, the heater and the thermal-tuning phase shifter waveguide layer are spaced from each other, one end of the thermal-tuning phase shifter electrode is coupled to the heater, and the other end of the thermal-tuning phase shifter electrode is disposed on a first surface of the second oxide layer.

13. An optical module, comprising a housing and a printed circuit board and an optical chip that are disposed in the housing, wherein the optical chip is electrically connected to the printed circuit board, and the optical chip uses the optical chip according to any one of claims 1 to 12.

14. An optical communication device, comprising a device chassis and a mainboard that is disposed in the device chassis, and further comprising an optical module connected to the mainboard, wherein the optical module comprises the optical chip according to any one of claims 1 to 12, or the optical module uses the optical module according to claim 13.
